Europäisches Patentamt

European Patent Office

Office européen des brevets

(19)

(11) Publication number: **0 095 807**
**A2**

# EUROPEAN PATENT APPLICATION

(21) Application number: **83200727.2**

(22) Date of filing: **24.05.83**

(51) Int. Cl.³: **F 03 D 1/06**

(30) Priority: **27.05.82 NL 8202174**

(43) Date of publication of application: **07.12.83**
Bulletin 83/49

(84) Designated Contracting States: **BE DE FR GB NL SE**

(71) Applicant: **Multinorm B.V., Hoofdweg 1278 P.O. Box 1, NL-2150 AA Nieuw-Vennep (NL)**

(72) Inventor: **Weststrate, Marinus Hendrikus, 11 Heereweg, NL-2161 AB Lisse (NL)**
Inventor: **Vissers, Hermanus Hendrik, 711 Venneperweg, NL-2152 AA Nieuw-Vennep (NL)**

(74) Representative: **Hoorweg, Petrus Nicolaas et al, OCTROOIBUREAU ARNOLD & SIEDSMA Sweelinckplein 1, NL-2517 GK The Hague (NL)**

(54) Windmill, rotor, rotor blade and mast for the same and method of manufacturing said rotor blade.

(57) A windmill whose mast formed by a lower vertical part (1) and a rotatable inclined upper part (4) to which is connected the rotor (5) formed by at least two blades (6) so as to be rotatable about a horizontal rotor axis A–A, wherein each blade (6) made of parallel extruded profiles (10) is coupled with a blade carrier so as to be tiltable about an axis parallel to said blade (6) and extending beyond the centre of gravity Z thereof, the axis of tilt crossing the rotor axis A–A at a distance therefrom, whilst means for resetting the blade towards the rotor plane are arranged on the carrier, whereby the blades will be urged out of the rotor plane at an increase in wind load so that the wind pressure on the blade decreases to an extent such that the same torque is ensured with a speed of rotation remaining the same.

Windmill, rotor, rotor blade and mast for the same and method of manufacturing said rotor blade

-----------------------------------------------------------------

The invention relates to a windmill with whose mast is connected the rotor formed by at least two blades so as to be rotatable about a horizontal rotor axis.

The object of the invention is to provide a windmill in particular for producing energy, which has a simple construction and can be easily controlled. The rotor blades are tiltably connected with the rotor shaft in a manner such that with any wind speed and wind directions a constant speed of rotation is ensured irrespective of the demand for energy at a given instant of the day. This means that at full load and no-load respectively the rotor blades automatically set themselves without the rotor "running amuck".

The rotor of a windmill embodying the invention is distinguished in that each blade is coupled with a blade carrier so as to be tiltable about an axis parallel to said blade and extending beyond the centre of gravity thereof, the axis of tilt crossing the rotor axis at a distance therefrom, whilst means for resetting the blade towards the rotor plane are arranged on the carrier.

Thanks to the tiltable disposition of the blades the blade will be urged out of the rotor plane at an increase in wind load so that the wind pressure on the blade decreases to an extent such that the same torque is ensured with a speed or rotation remaining the same.

In order to limit the speed or rotation also at a drop of demand, which might cause the rotor to run away, the centre of gravity of the blade is disposed behind the plane going thöugh the axis of tilt of the blades with respect to the direction of the wind so that the line going through the centre of gravity and being parallel to the axis of tilt across the rotor axis on the same side as the axis of tilt. This disposition ensures that at an increase in the number of revolutions the blade tilts further out of the rotor plane so that the rotor becomes self-braking. Therefore, there is no need for providing braking means on the windmill.

Preferably the reset means are formed by an element adapted to turn about the rotor axis and being connected on the one hand by means of a pivotal rod with the blade and on the other hand through spring means with the blade carrier. In this way not only equal displacements of the rotor blades, but also a uniform reset force on the blades are ensured.

In one embodiment the spring means are formed by helical springs, the longitudinal axis of which is, at the average blade angle to the plane of rotation, at an angle of more than 90° to the line going through the point of engagement between the element and the rotor shaft. It is thus ensured that the reset moment supplied by the spring and the rotatable element becomes smaller, the more the blade tilts out of the rotor plane, since the reset forces acting on the blade resulting from wind loads and the speed of rotation also decrease according as the blade has tilted further out of its plane.

The invention furthermore relates to a rotor blade for a windmill of the kind set forth in the preamble, which rotor blade can be manufactured in a particularly simple and cheap manner. The rotor blade is characterized in that it is constructed from one or more profile elements, the shape and wall thickness of which remain the same throughout the length. Owing to this profile design the profile can be cut to the desired length in a continuous manufacturing process so that the blades can be adapted to mills of different powers.

Preferably the or each element for the rotor blade is an extruded profile.

According to the invention this also enables to assemble the blade from two or more longitudinal profiles, at least part of the outer surface of which is curved in accordance with the desired streamline profile of the blade, whilst the further part of the outer surface is provided with means for interconnecting the profile.

A particularly rigid structure can be obtained by shaping each profile in the form of a hollow profile.

The profiles may be fastened to one another, for example, by using a connecting means in the form of a curable substance such as two-component glues or the like.

In order to stiffen the rotor blade, if necessary, the or each longitudinal profile has, in accordance with the invention, one or more tightly closing inner profiles rigidly secured thereto. These inner profiles may have a smaller length than the outer profiles, whilst it is ensured that at least the ends of the profiles are all located at the hub side on the foot of the blade, said ends serving to secure the blade to the hub.

According to the invention this hub is preferably designed in the form of a box-shaped element open on one side for receiving the root of a rotor blade, the connection being established, for example, by means of a curable substance between the hub and the profiles of the blade.

The profiles are preferably made from lightweight metal, for example, whilst a small wall-thickness of the extruded profile can be maintained since the blade is assembled from a plurality of profiles in cross-section, which is advantageous particularly in the case of large dimensions.

The use of longitudinal profiles furthermore provides the possibility of obtaining a torsioned rotor blade without many additional manipulations by maintaining the blades in a bench in a torsioned position during the assembling process until the profiles are definitely fastened to one another.

According to the invention the windmill is designed so that viewed in the direction of incoming wind the rotor is located behind the mast. As a result the rotor is self-setting without the need for wheeling devices in the form of vanes or a wheeling motor.

The mast is preferably formed by a lower, vertical or substantially vertical part and a part inclined to the former, to which the rotor is fastened.

In one embodiment a rotatable joint is provided between the lower vertical part and the inclined part.

The invention finally relates to a mast for various uses such as lighting columns or transmission pylons or a windmill preferably of the type described above, said mast being distinguished in that it is formed by a helically wound, conical cylinder of partly overlapping, thin metal strips, the rims of which are secured to one another.

The invention will be described more fully with reference to a few embodiments.

The drawing shows in:

Fig. 1 a perspective, vertical view of a windmill embodying the invention,

Fig. 2 a perspective view in the same direction as in fig. 1 of a detail of a rotor blade suspension and a reset device,

Fig. 3 a sectional view of a rotor blade taken on the line III-III in fig. 1,

Fig. 4 a perspective view of a second embodiment of a blade on a torsioned shape,

Fig. 5 a cross-sectional view of a blade in a further embodiment.

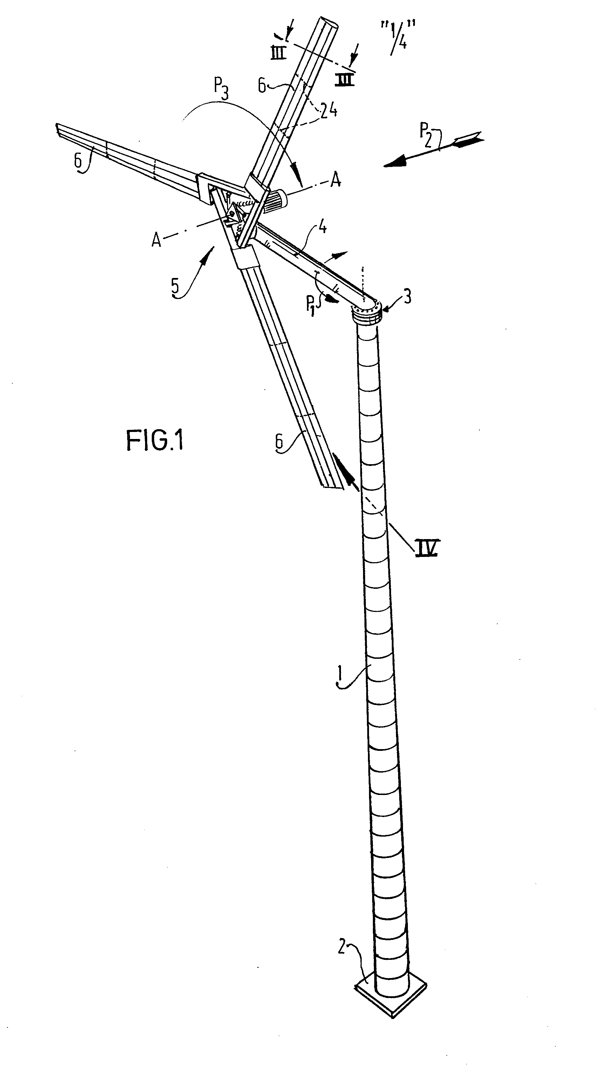

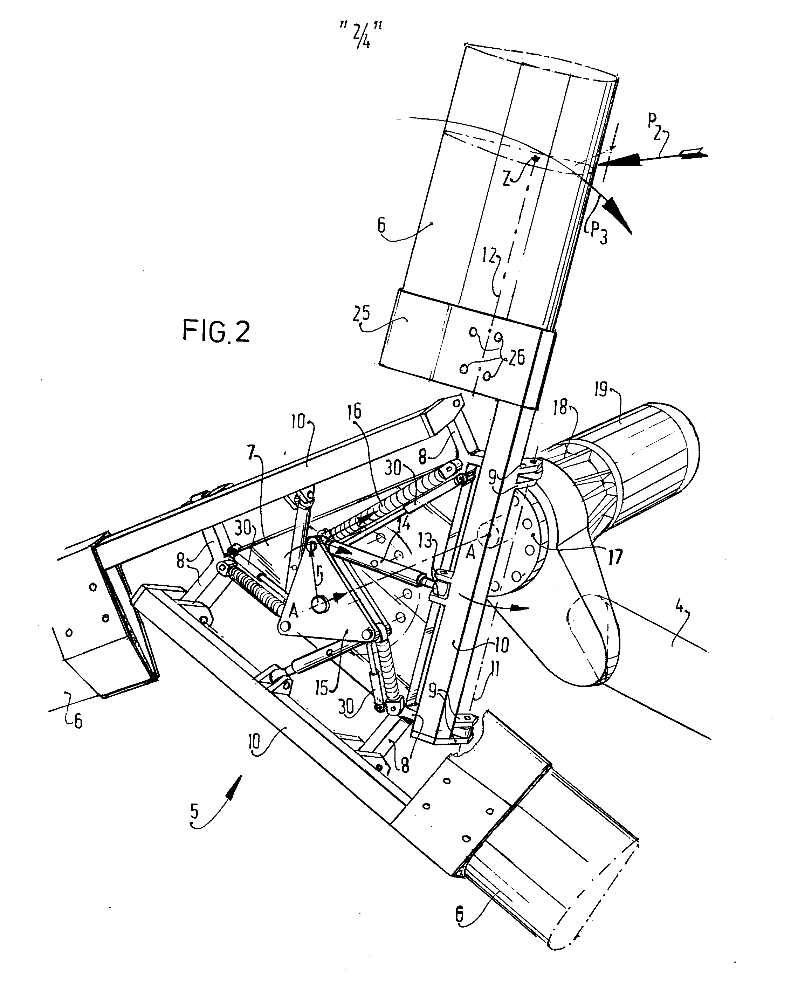

The windmill shown in fig. 1 mainly comprises a mast 1, which can be fastened in any suitable manner to a foot 2 without the use of guy ropes. At the top the mast is provided with a rotary bearing 3, on which an inclined mast part 4 can swing to and fro around the longitudinal axis of the vertical mast 1 in the direction of the arrow P1. At the end of the inclined part 4 of the mast is arranged a rotor 5, which is shown in detail in fig. 2. The rotor is rotatable about a horizontal axis A-A so that at the wind direction shown by the arrow P2 the rotor rotates in the direction of the arrow P3. It is noted that with respect to the direction of incoming wind the rotor 5 is located behind the vertical mast 1. As a result the mill is self-setting with respect to the wind direction P2 because at a turn of the wind the rotor will turn itself into the correct position around the vertical mast 1.

The rotor shown in the figures comprises three blades 6, each of which is tiltably fastened to a blade carrier formed by a triangular plate 7. (See fig. 2). At each corner the plate 7 is equipped with supports 8 on which ears 9 of the arm 10 aligned to each blade 6 are arranged so as to be pivotable about an axis 11. The position of the ears 9 with respect to the arm 10 and hence that of the blade 6 is such that the plane going through the axes of tilt 11 for the line 12 goes through the centres of gravity of the cross-sections of each blade 6 in fig. 2, which means that the centre of gravity is behind the plane going through the axes of tilt 11 with respect to the wind direction P2. The disposition is such that both the axes of tilt 11 and the gravity lines 12 cross the rotor axis A-A on the same side thereof.

The arm 10 is furthermore provided with ears 13 constituting a pivotal joint with a coupling rod 14, the other end of which is pivoted to the corner of a triangular, rotatable element 15. Each corner of the element 15 is connected by a coupling rod 14 with a blade. Said corner is also rotatably coupled with a helical spring 16, the other end of which is fastened to the blade carrier 7. The direction of the helical spring 16 is such that its axis, in the average position of a blade 6, it at an angle of more than 90° to the radial line between the point of connection with the element 15 and the rotor axis A-A.

To absorb shocks due to windspeed variation shock absorbing means 30 are arranged between said blade carrier and said triangular element. In the figures is shown an hydraulic shock absorber extending parallel to said spring 16. It is however possible to arrange a friction absorber between the plate 7 and element 15.

The suspension structure described above operates as follows:

At wind load in the direction of the arrow P2 the blade 6 will turn about the axis 11 out of the plane of the drawing in fig. 2 towards the front so that also the coupling rod 14 is displaced in a manner such that the rotary element 15 turns in clockwise direction. As a result the helical screw 16 is exposed to pressure and will exert a reset force. The reset moment is determined by the line of force through the spring 16 and the distance of the line of force from the rotor axis A-A. With an increasing turn of the element 15 said distance will shorten when the blade position gets further out of the plane of rotation. In a given blade position an equilibrium with the wind speed is thus obtained by choosing the correct dimensions of the helical spring 16 and the spring contact as well as the length of the coupling rod 14. At this equilibrium the rotor rotates with the predetermined number of revolutions.

Since with respect to the rotor axis A-A the centre of gravity Z is located behind the pivotal axis 11, the blades will swing outwards during the rotation of the rotor by centrifugal force. Therefore, with an increasing speed of rotation the blade angle will increase, but at an excessive speed the blade has a braking effect with respect to the wind direction so that the speed of rotation can never exceed a given, desired number of revolutions. This is mportant in the case of an abrupt drop of required power. The blade carrier 7 is firmly coupled with a flange 17, which is connected through a gear box 18 with an energy producer 19, for example, formed by an a-synchronous A.C. motor.

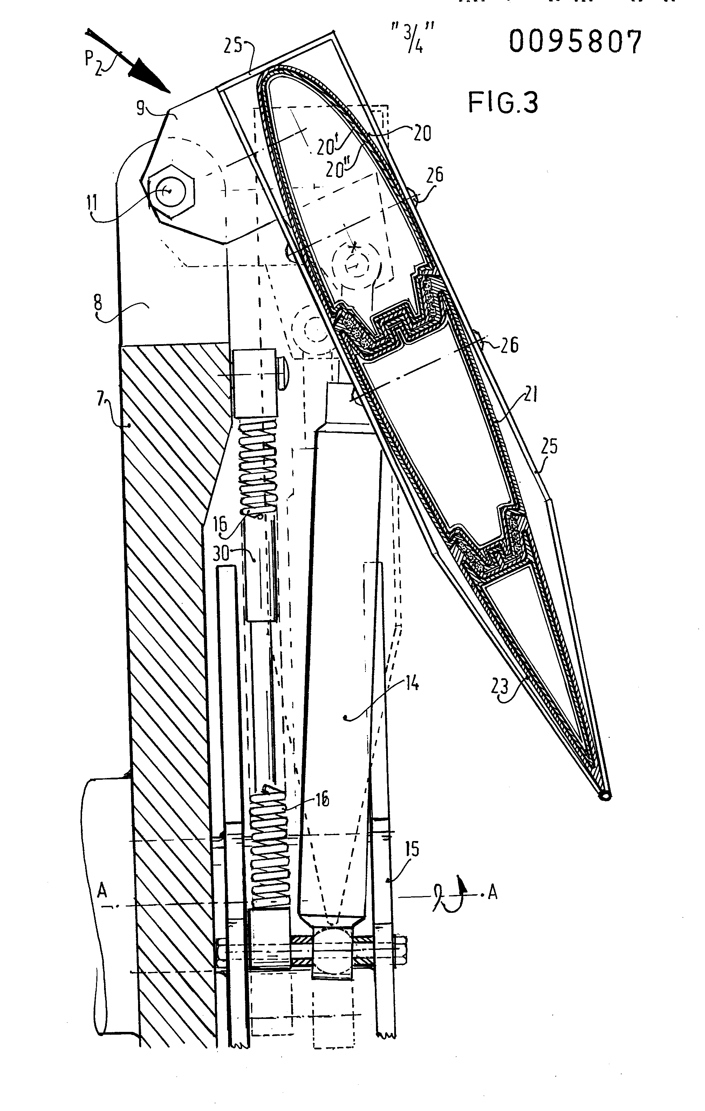

According to the invention each blade is built from profiles, the wall thickness and the shape of which are constant throughout the length. Such profiles can be simply made in an extrusion process and thanks to the shape divided in cross-section aluminium profiles of small wall thickness can be obtained. This contributes to the low weight of the blades. The interconnection of the profiles 20, 21 and 23 (see fig. 3) can be established by means of a dowel joint 24, if desired with a sandwiched glue. This ensures a firm connection. It may ne necessary to provide one or more inner profiles 20', 20'' in the outermost profile 20, which may also apply to the further profiles 21 and 23 respectively.

The length of these inner profiles need not be the same; it may be individually shortened for a given distance, which is indicated by way of example by broken lines 24 in fig. 1. In this way a rotor blade is obtained, which has a slight weight accompanied by high strength near the root of the blade. The root of the blade may be housed in hubs 25 in the form of a box open on one side, whilst the space between a hub 25 and the profiles may be filled out, for example, with a curable mass. If necessary fastening bolts 26 may be used.

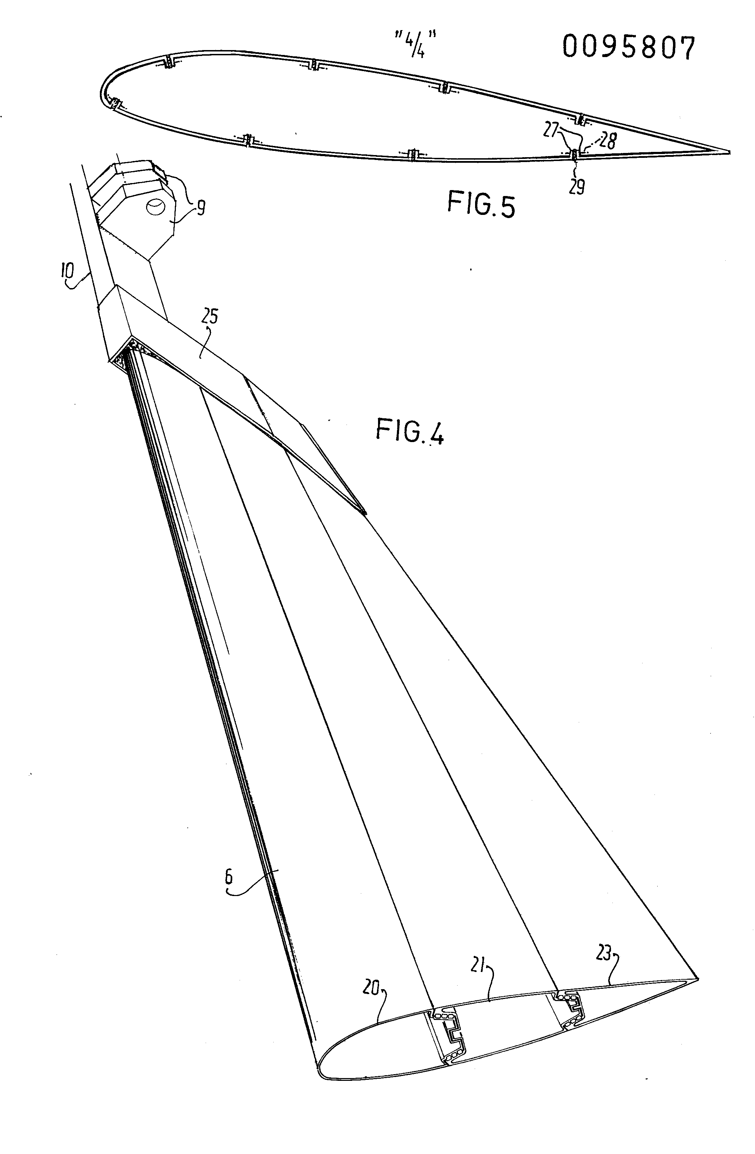

Fig. 4 shows an embodiment in which the profiles of a rotor blade are torsioned, which can be carried out in a simple manner by putting the profiles in a bench in a torsioned state during the assembly of the blade, after which the mass in the dowel joint can harden.

Within the scope of the invention other connecting means are conceivable. For example, fig. 5 shows a blade formed by profiles, which are constructed in the form of a plate rather than of box-shaped profiles, said plate corresponding to the curved shape of the desired streamline profile on the sidewalls, which are provided with flanges 27, between which tie means 28 can be arranged. A curable mass 29 provides the definite connection.

Reference is finally made to fig. 1 with respect to the mast 1, which is formed by a helically wound, conical cylinder of thin metal strips. The sidewalls of the metal strips overlap one another and may be interconnected by a fillet weld. By increasing or decreasing the pitch of the helix the bending resistance of the mast can be adapted to the prevailing conditions. Such masts are, therefore, particularly suitable to be used as posts exposed to relatively high bending loads, because these masts can be anchored without stays and the like.

The invention is not limited to the embodiments described above.

---

-1- 0095807

WHAT IS CLAIMED IS:

1. A rotor for a windmill with whose mast is connected the rotor comprising at least two blades so as to be rotatable about a horizontal rotor axis characterized in that each blade is coupled with a blade carrier so as to be tiltable about an axis extending parallel to said blade at the side of the centre of gravity thereof, said axis of tilt crossing the rotor axis at a distance whilst means are provided for resetting the blade or the carrier towards the rotor plane.

2. A rotor as claimed in claim 1, characterized in that the centre of gravity of the blade is located, with respect to the direction of the wind, behind the plane going through the axes of tilt of the blades and in that the line extending parallel to the axis of tilt and going through the centre of gravity crosses the rotor axis on the same side as the axis of tilt.

3. A rotor as claimed in claims 1 and 2 characterized in that said means are formed by an element adapted to turn about the rotor axis and being connected on the one hand by means of a pivotal rod with the blade and on the other hand through spring means with the blade carrier.

4. A rotor as claimed in claims 1 to 3, characterized in that the spring means are designed in the form of a helical spring, the longitudinal axis of which, in the average blade angle with respect to the plane ofotation, is at an angle of more than 90° to the line going rough the point of engagement between the element and the rotor axis.

5. A rotor as claimed in claims 1 to 4, characterized in that shock absorbing means are arranged.

6. A rotor as claimed in claim 5, characterized in that said shock absorbing means are formed by a shock absorber of an hydraulic type arranged between the blade carrier and said element.

7. A rotor blade for a windmill, said blade having an elongate shape and being connectable at one end with a hub or the like, characterized in that the blade is built up from one or more profile elements, the shape and the wall thickness of which are the same throughout the length.

8. A rotor blade as claimed in claim 7 characterized in that the or each element is an extruded profile.

9. A rotor blade as claimed in claims 7 and 8 characterized in that the blade is assembled from two or more longitudinal profiles, at least part of the outer surface of which is curved in accordance with the desired streamline profile of the blade, whilst the further part of the outer surface is provided with means for interconnecting the profile.

10. A rotor blade as claimed in claim 9 characterized in that the profiles are designed in the form of box-shaped profiles.

11. A rotor blade as claimed in claims 9 and 10 characterized in that the fastening means are formed by a dowel joint arranged on the outer sides of the profiles to be fastened to one another.

12. A rotor blade as claimed in claims 9 and 11 characterized in that the dowel joint has three chambers near the outer side of each blade for receiving connecting means.

13. A rotor blade as claimed in claim 12 characterized in that with the aid of a curable adhesive paste a permanent joint is established between the longitudinal profiles.

14. A rotor blade as claimed in anyone of the preceding claims 7 to 12 characterized in that the or each longitudinal profile has rigidly adhered to it one or more narrowly fitting inner profiles.

15. A rotor blade as claimed in anyone of the preceding claims 7 to 14, characterized in that the inner profiles have a smaller length than the inner or outer profile respectively located outside the same.

16. A rotor blade as claimed in claims 14 or 15, characterized in that the ends of the outer and/or inner profiles are located on the side of the hub and serve for fastening to the hub.

17. A rotor blade as claimed in anyone of the preceding claims characterized in that the profiles are made from light-weight material, for example, aluminium.

18. A rotor blade as claimed in anyone of the preceding claims 6 to 17 characterized in that the hub is provided with a box-shaped element open on one side for receiving a root of the rotor blade.

19. A method of assembling a rotor blade as claimed in anyone of the preceding claims 6 to 18 from profiles characterized in that the connecting surfaces at the fastening means of the profiles and/or the box-shaped element are provided with a curable substance, for example, paste, the profiles are joined to one another, the root of the assembled blade is slipped into the box-shaped element and the substance is allowed to curve.

20. A method as claimed in claim 19 characterized in that the profiles are maintained in a torsioned state until the substance has curved.

21. A windmill comprising a mast and a rotor having two or more rotor blades as claimed in anyone of the preceding claims 1 to 6 and 6 to 18 respectively.

22. A windmill as claimed in claim 21 characterized in that, viewed in the direction of the incoming wind, the rotor is located behind the mast.

23. A windmill as claimed in claim 21 characterized in that the mast is formed by a lower, vertical or substantially vertical part and a part inclined to the former, on which the rotor is arranged.

24. A windmill as claimed in claim 23 characterized in that a rotatable joint is arranged between the lower, vertical or substantially vertical mast part and the inclined mast part.

25. A windmill as claimed in anyone of the preceding claims characterized in that an energy producer coupled with the rotor shaft, for example, an a-synchronous A.C. generator is arranged at the top end of the inclined mast part.

0095807

26. A mast for various uses, for example, a lighting column or a transmission pylon or for a rotor characterized in that it is made from a helically wound, conical cylinder of partly overlapping thin metal strips fastened to one another.

27. A mast as claimed in claim 26 characterized in that the pitch of the helix varies along the length of the mast.

-----

FIG.1

FIG.2

FIG.3

0095807

FIG.5

27
28
29

FIG.4

9

10

25

6

20

21

23